# EUROPÄISCHE PATENTANMELDUNG

(11) **EP 2 184 706 A1**
(43) Veröffentlichungstag der Anmeldung: **12.05.2010**
(21) Anmeldenummer: 08019638.9
(22) Anmeldetag: 10.11.2008
(51) Int. Cl.: G06Q 10/00, G06F 21/00

(54) **Verfahren und Vorrichtung zum Betreiben einer Anlage unter Verwendung von gegen unberechtigte Verwendung gesicherten Daten**

(71) Anmelder: Siemens Aktiengesellschaft, 80333 München (DE)
(72) Erfinder: Cuellar, Jorge, Dr., 82065 Baierbrunn (DE); Köpken, Hans-Georg, Dr., 91056 Erlangen (DE); Lenord, Matthias, Dr., 91088 Bubenreuth (DE); Maidl, Monika, Dr., 81675 München (DE)

(57) **Zusammenfassung**

Die Erfindung betrifft ein Verfahren zum Betreiben einer technischen Anlage (30) unter Verwendung von in Form von Daten einem Rechteinhaber (10) bereitgestelltem, gegen unberechtigte Verwendung gesichertem geistigen Eigentum (12-18) und eine nach dem Verfahren arbeitende Vorrichtung, wobei zum Sichern des geistigen Eigentums (12-18) verschlüsselte Rechteobjekte (40,42) verwendet werden und sukzessiv zumindest zwei Rechteobjekte - erstes und zweites Rechteobjekt (40,42) - empfangen werden, wobei abgeleitete Rechteobjekte (56) durch Kombination zweier oder mehrerer Rechteobjekte (40,42) oder abgeleiteter Rechteobjekte (56) aufgrund davon jeweils umfasster Daten (44) generiert und schließlich zum Betreiben der Anlage (30) verwendet werden, wobei insbesondere für die Generierung abgeleiteter Rechteobjekte (56) zwischen empfangenen und abgeleiteten Rechteobjekten (40,42,56) bestehende hierarchische Abhängigkeiten ausgewertet werden, die z.B. durch von den Rechteobjekten (40,42,) umfasste Schlüssel ausgedrückt sind.

## Beschreibung

Die Erfindung betrifft ein Verfahren zum Betreiben einer technischen Anlage, z.B. einer Produktionsanlage, unter Verwendung von Daten, die von einem Rechteinhaber bereitgestellt und gegen unberechtigte Verwendung gesichert sind. Die Absicherung der Daten gegen unberechtigte Verwendung erfolgt mittels so genannter Rechteobjekte. Die Erfindung betrifft darüber hinaus eine Vorrichtung mit Mitteln zur Ausführung des Verfahrens, ein korrespondierendes Computerprogramm, einen Datenträger mit einem solchen Computerprogramm und ein Computersystem, auf dem ein solches Computerprogramm geladen ist.

Generell werden Rechteobjekte wie sie bei der vorliegenden Erfindung im Vordergrund stehen, dann verwendet, wenn eine Partei geistiges Eigentum, wie z.B. Details über einen zu produzierenden Gegenstand, außer Haus geben muss, um entweder dessen Produktion oder produktionsvorgelagerte oder produktionsbegleitende Arbeiten oder Untersuchungen bei einem externen Dienstleister in Auftrag zu geben. Eine solche Weitergabe ist für den Rechteinhaber stets mit Risiken verbunden, die sich durch eine vertragliche Absicherung nur begrenzt handhaben lassen. Ein einzelnes Rechteobjekt ist dazu vorgesehen, einzelne Rechte zu spezifizieren, die der Empfänger solcher Daten im Zusammenhang mit den jeweils in Auftrag gegebenen Dienstleistungen erhält. So muss ein als Produktionsdienstleister agierender Betreiber entsprechender Produktionsmittel oder -vorrichtungen notwendig konstruktive oder sonstige technische Details der jeweils zu produzierenden Gegenstände kennen. Andererseits soll eine Produktion solcher Gegenstände nur innerhalb eines vertraglich bestimmten Umfangs möglich sein, so dass mit Rechteobjekten zumindest eine vertraglich vereinbarte Mengenbegrenzung kodiert wird. Ein Dienstleister, der produktionsbegleitend oder im Vorfeld einer Produktion z.B. Simulationen in Bezug auf die zu produzierenden Güter durchführt, muss möglicherweise nicht sämtliche Details des jeweiligen Gegenstands kennen. In einem solchen Szenario übermittelte Rechteobjekte können also bei Daten, die den jeweiligen Gegenstand vollumfänglich beschreiben, eine Leseberechtigung nur für solche Daten kodieren, die für die von diesem Dienstleister durchzuführenden Simulationen relevant sind. Damit sind im Ergebnis z.B. nur Daten zur Geometrie und zur Oberflächenbeschaffenheit für Strömungsanalysen zugänglich und keine Daten, die sich auf die interne Funktionalität des Gegenstandes beziehen. Umgekehrt ist für einen Dienstleister, der die elektrische Tauglichkeit eines Gerätes oder die Funktionalität einer davon umfassten Software zu verifizieren hat, eine Leseberechtigung für diesbezügliche Daten mit den jeweiligen Rechteobjekten kodiert, während ein Zugriff auf andere Daten verwehrt ist.

Eine Rechteverwaltung (Digital Rights Management; DRM) wie eingangs skizziert, ist seit geraumer Zeit Gegenstand von Entwicklungsbemühungen, und eine digitale Rechteverwaltung ist z.B. aus dem Bereich der Unterhaltungsindustrie bekannt, wo Datenträger mit Bild- und/oder Tondaten mit einem Kopierschutz versehen werden, um sicherzustellen, dass ein Erwerber keine Kopien zur unberechtigten Weitergabe anfertigt. Für Dienstleister, die im Auftrage von Inhabern von geistigem Eigentum, das sich z.B. auf derartige Bild- und Tondaten bezieht, Datenträger produzieren, ist bekannt, dass einer konkreten Produktionseinrichtung durch jeweils ein konkretes Rechteobjekt die Rechte zur Erstellung einer bestimmten Anzahl von Datenträgern gewährt werden.

Die Erfindung befasst sich demgegenüber mit dem Problem, wie eine dauerhafte Zusammenarbeit zwischen einem Rechteinhaber und einem Dienstleister und die dieser zumindest implizit zugrunde liegenden, komplexen vertraglichen Beziehungen automatisch, elektronisch mittels einer Mehrzahl sukzessiv ausgetauschter Rechteobjekte handhabbar werden. Eine starre Rechtevergabe, wie z.B. aus der Unterhaltungsindustrie bekannt, ist zumindest ungeeignet, so dass eine elektronische Überprüfung und Begrenzung vertraglich eingeräumter Rechte bisher auf automatischem Wege nicht stattgefunden hat und man sich stattdessen auf Seiten des Rechteinhabers auf das wirtschaftliche Interesse des Empfängers der sensiblen Daten an einer langfristigen Zusammenarbeit verlassen hat oder hat verlassen müssen.

Die Erfindung ist ein Verfahren zum Betreiben einer technischen Anlage unter Verwendung von in Form von Daten von einem Rechteinhaber bereitgestelltem und gegen unberechtigte Verwendung gesichertem geistigen Eigentum. Zum Sichern des geistigen Eigentums werden Rechteobjekte verwendet, die unabhängig von dem geistigen Eigentum von dem Rechteinhaber oder durch diesen übermittelt werden. Sukzessiv werden zumindest zwei Rechteobjekte, die im Folgenden zur Unterscheidung teilweise auch als erstes und zweites Rechteobjekt in Bezug genommen werden, auf Seiten des Dienstleisters empfangen. Abgeleitete Rechteobjekte werden durch Kombination zweier oder mehrerer Rechteobjekte oder auch abgeleiteter Rechteobjekte aufgrund davon jeweils umfasster Daten generiert. Einzelne Rechteobjekte oder abgeleitete Rechteobjekte stehen also in einer hierarchischen Relation zu anderen Rechteobjekten oder abgeleiteten Rechteobjekten. Die Hierarchie bedingt, dass eine vollständige Beschreibung der einem Dienstleister eingeräumten Rechte erst nach Kombination mehrerer Rechteobjekte oder abgeleiteter Rechteobjekte vorliegt. Auf diese Weise kann eine zwischen Rechteinhaber und Dienstleister häufig vorkommende Zusammenarbeit auf Basis eines oder mehrerer Rahmenverträge, die dann durch später erteilte Aufträge konkretisiert werden, abgebildet werden. Sobald eine vollständige Beschreibung der einem Dienstleister eingeräumten Rechte vorliegt, können diese zum Betreiben der technischen Anlage verwendet werden.

Darüber hinaus ist die Erfindung auch eine Vorrichtung zur Durchführung des Verfahrens und nachfolgend beschriebener Ausgestaltungen, nämlich eine Vorrichtung zum Betreiben einer technischen Anlage unter Verwendung von in Form von Daten von einem Rechteinhaber bereitgestelltem und gegen unberechtigte Verwendung gesichertem geistigen Eigentum, wobei Mittel zum Ausführen des Verfahrens zumindest eine Funktionalität zum sukzessiven Empfang zumindest zweier Rechteobjekte, eine Funktionalität zum Generieren abgeleiteter Rechteobjekte durch Kombination zweier oder mehrerer Rechteobjekte oder abgeleiteter Rechteobjekte aufgrund davon jeweils umfasster Daten und eine Funktionalität zum Weiterleiten abgeleiteter Rechteobjekte zum Betreiben der technischen Anlage umfassen.

Wenn hier und im Folgenden von "Mitteln zum" oder einer "Funktionalität zum" die Rede ist, ist das Verständnis, dass sich dies auf eine Implementierung des jeweils in Bezug genommenen Verfahrensschrittes oder einer Verfahrensschrittfolge in Software bezieht. Die Erfindung betrifft also eine Vorrichtung, die eine Softwareimplementierung des Verfahrens umfasst, zum Verarbeiten von Rechten, die einem Betreiber einer Anlage mittels elektronisch weiterleitbarer Rechteobjekte gewährt werden.

Als hier und im Folgenden relevante Bestandteile der Anlage kommen besonders Produktionsmittel oder -geräte in Betracht, so dass mit dem Rechteobjekt einem Betreiber solcher Mittel oder Geräte Rechte verliehen werden können, die sich z.B. auf Art und Umfang zu produzierender oder produzierbarer Güter beziehen. Nachdem jedoch Unternehmen häufig auch Arbeiten, die einer Produktion zeitlich vorgelagert oder produktionsbegleitend auszuführen sind, outsourcen wollen oder müssen, kommen als Vorrichtungen auch Geräte, mit denen z.B. eine Simulation später zu erstellender Produkte möglich ist oder Geräte, mit denen Tests oder Untersuchungen, insbesondere Qualitätsanalysen, durchgeführt werden können usw., in Betracht.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bevorzugt ist vorgesehen, dass sich einzelne, von dem ersten oder zweiten Rechteobjekt umfasste Daten auf einzelne, von dem zweiten bzw. ersten Rechteobjekt umfasste Daten beziehen, so dass sich, wenn sich z.B. von einem zweiten Rechteobjekt umfasste Daten auf von einem ersten Rechteobjekt umfasste Daten beziehen, eine hierarchische Beziehung zwischen erstem und zweitem Rechteobjekt ergibt. Für das Szenario, auf das die Erfindung abzielt, bedeutet dies, dass mit einem ersten oder zeitlich vorangehenden Rechteobjekt Rahmenbedingungen für die Verwendung oder Verwendbarkeit des gesicherten geistigen Eigentums vorgegeben werden, während mit dem zweiten oder einem nachfolgenden Rechteobjekt eine nähere Konkretisierung dieser Rahmenbedingungen erfolgt. Eine derartige Hierarchie ist nicht auf zwei Rechteobjekte beschränkt, sondern kann eine grundsätzlich beliebige Anzahl jeweils direkt oder indirekt hierarchisch voneinander abhängiger Rechteobjekte umfassen, wobei ein in einer solchen Hierarchie "letztes" Rechteobjekt eine konkret zugelassene Verwendbarkeit des geistigen Eigentums definiert. Bei den in hierarchischer Beziehung stehenden Rechteobjekten muss es sich auch nicht notwendig um vom Rechteinhaber empfangene Rechteobjekte, sondern es kann sich genauso um abgeleitete Rechteobjekte handeln, also Rechteobjekte, die aus einer Kombination zuvor empfangener Rechteobjekte hervorgehen.

Wenn als zusammengehörige Rechteobjekte solche Rechteobjekte aufgefasst werden, bei denen sich von einem zweiten Rechteobjekt umfasste Daten auf diejenigen eines ersten Rechteobjekts beziehen, ist bevorzugt vorgesehen, dass diese Zusammengehörigkeit durch eine Kennzeichnung deutlich gemacht wird, so dass für eine zur Verarbeitung der Rechteobjekte vorgesehene Funktionalität zum Generieren abgeleiteter Rechteobjekte bereits anhand der Kennzeichnung deren Zusammengehörigkeit erkennbar ist.

Bevorzugt ist vorgesehen, dass diese Kennzeichnung ein gemeinsam verwendeter Schlüssel ist oder ein solcher Schlüssel einen Teil der Kennzeichnung bildet. Bei einem solchen Schlüssel handelt es sich um einen Schlüssel, der z.B. auch zur Verschlüsselung der von dem Rechteobjekt umfassten Daten Verwendung finden kann.

Bevorzugt ist vorgesehen, dass sich die Kennzeichnung, welche Rechteobjekte in einer Abhängigkeitshierarchie zusammengehören, mit einem von den Rechteobjekten jeweils umfassten Schlüssel ergibt. Dann hat der Schlüssel eine Doppelfunktion, nämlich einmal die Absicherung übertragener Daten und andererseits die Kennzeichnung der gegebenen Abhängigkeiten zwischen evtl. in zeitlich großen Abständen empfangenen Rechteobjekten. Vorteilhaft ist dabei vorgesehen, dass jedes Rechteobjekt einen Schlüssel zum Entschlüsseln evtl. von diesem Rechteobjekt abhängiger Rechteobjekte umfasst, so dass in jedem Fall sichergestellt ist, dass ein Zugriff auf ein abhängiges Rechteobjekt nur dann möglich ist, wenn das zugrunde liegende Rechteobjekt bereits empfangen wurde. Wenn darüber hinaus vorgesehen ist, dass jedes abhängige Rechteobjekt unter Verwendung jedes entlang einer jeweiligen Hierarchie empfangenen Schlüssels entschlüsselt wird, ist darüber hinaus sichergestellt, dass ein Zugriff auf abhängige Rechteobjekte nur dann möglich ist, wenn sämtliche in der Hierarchie vorangehenden Rechteobjekte vorliegen. Auf diese Art und Weise hat der Rechteinhaber maximale Kontrolle darüber, wie sein geistiges Eigentum auf Seiten des Dienstleisters verwendet wird. Wenn ein Zugriff auf ein abhängiges Rechteobjekt nur mit Verwendung sämtlicher entlang der jeweiligen Hierarchie empfangener Schlüssel möglich ist, lässt sich z.B. sicherstellen, dass ggf. in verschiedenen Konfigurationen zusammenpassende Rechteobjekte nur in genau der Konfiguration kombiniert werden, wie dies ursprünglich vom Rechteinhaber vorgesehen und sodann durch die Hierarchie der Rechteobjekte festgelegt wurde.

Für eine vorteilhafte Ausgestaltung der Vorrichtung sind bevorzugt Mittel, welche die Funktionalität eines Parsers implementieren, vorgesehen. Solche Mittel oder der Parser selbst sind zur Auswertung und Verarbeitung empfangener Rechteobjekte und abgeleiteter Rechteobjekte bestimmt und von der Funktionalität zum Generieren abgeleiteter Rechteobjekte umfasst. Die von den Rechteobjekten als Daten umfassten Beschreibungen hinsichtlich der zugelassenen Verwendung des geistigen Eigentums können damit in einer definierten Syntax erfolgen, die durch den Parser interpretiert wird. Der Parser übernimmt damit gleichsam die Vorverarbeitung des Inhalts einzelner Rechteobjekte, so dass auf Basis dieser Vorverarbeitung und einer ggf. sich anschließenden Analyse die Kombination zweier Rechteobjekte, genauer die Kombination der von mindestens zwei Rechteobjekten umfassten Daten, erfolgen kann.

Die Erfindung ist, soweit die zu deren Verwendung vorgesehene Vorrichtung betroffen ist, bevorzugt in Software implementiert, so dass die beschriebenen Mittel und Funktionalitäten, wie erwähnt, als Softwareimplementierung der entsprechenden Verfahrensschritte oder Verfahrensschrittfolgen aufzufassen sind, und die Erfindung danach auch ein Computerprogramm zur Ausführung des Verfahrens wie hier und im Weiteren beschrieben sowie einen Datenträger mit einem solchen Computerprogramm betrifft. Die Erfindung ist danach im Weiteren auch ein Computersystem, insbesondere eine Vorrichtung wie hier und im Weiteren beschrieben oder eine auf Seiten eines Dienstleisters vorgehaltene technische Anlage mit einer solchen Vorrichtung, auf dem ein derartiges Computerprogramm geladen ist.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

### Es zeigen

- FIG 1: ein Szenario, mit dem sich die Erfindung befasst, nämlich einem Rechteinhabereinflussbereich mit geistigem Eigentum des Rechteinhabers und einem Dienstleistereinflussbereich mit Vorrichtungen, die z.B. zur Produktion von Gütern entsprechend dem geistigen Eigentum in Betracht kommen, so dass das geistige Eigentum für die Inanspruchnahme von Dienstleistungen in den Dienstleistereinflussbereich übergehen muss und
- FIG 2: eine schematisch vereinfachte Darstellung des Ansatzes gemäß der Erfindung.

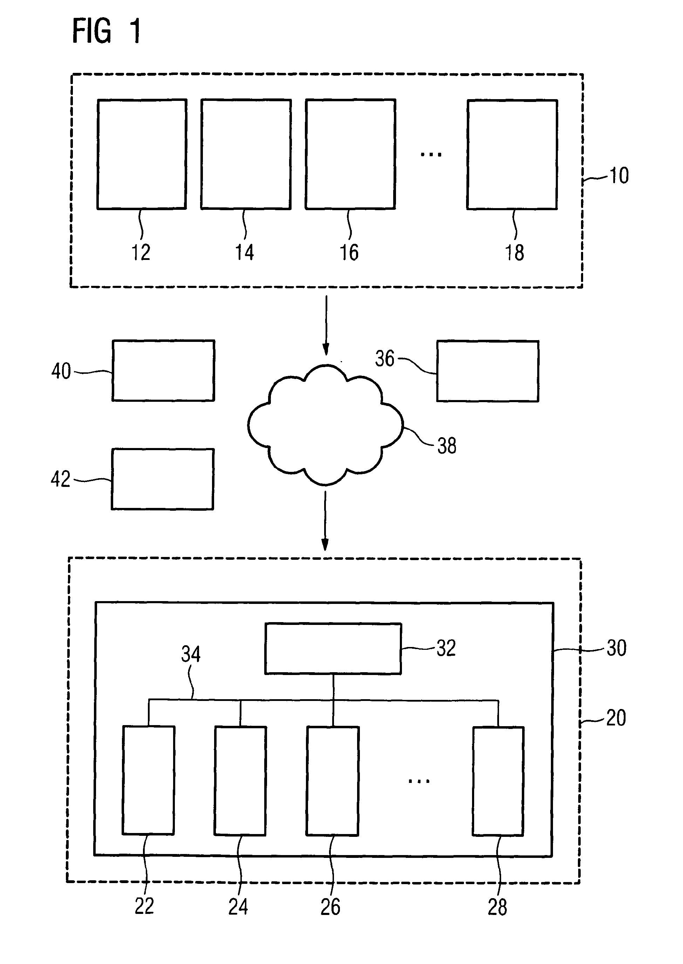

FIG 1 zeigt schematisch stark vereinfacht dargestellt ein Beispiel eines der Erfindung zugrunde liegenden Szenarios. Danach hält ein durch einen Rechteinhabereinflussbereich 10 dargestellter Rechteinhaber in seinem Einflussbereich geistiges Eigentum 12, 14, 16, 18 vor, z.B. Daten für die Herstellung bestimmter Güter, wie z.B. Kraftfahrzeugteile oder ähnliches. Wenn der Rechteinhaber 10 solche Güter nicht selbst herstellen will, muss er sich dazu eines durch einen Dienstleistereinflussbereich 20 dargestellten Dienstleisters bedienen, der in seinem Einflussbereich Produktionsmittel 22, 24, 26, 28 vorhält, mit denen Dienstleistungen für den Rechteinhaber 10 ausgeführt werden können. Bei den Produktionsmitteln 22-28 handelt es sich nicht notwendigerweise um Einrichtungen, die ein gegenständliches Ergebnis produzieren, sondern es kann sich genauso um Einrichtungen handeln, mit denen z.B. ein Simulationsergebnis o.ä. erhalten wird. Die weitere Beschreibung wird dennoch mit dem Begriff Produktionsmittel 22-28 fortgesetzt. Dabei wird davon ausgegangen werden, dass die oder jede vom Dienstleister 20 als Produktionsmittel vorgehaltene Vorrichtung 22-28 Bestandteil einer technischen Anlage, also z.B. einer Produktionsanlage 30 ist. Innerhalb derer sind die einzelnen Produktionsmittel 22-28 ggf. unter Verwendung einer übergeordneten Einheit 32 nach Art einer Leitstation kommunikativ miteinander verbunden, z.B. über einen Bus 34.

Wenn der Dienstleister 20 für den Rechteinhaber 10 tätig werden soll, übermittelt dieser dem Dienstleister 20 zumindest Teile seines geistigen Eigentums 12-18 in Form einer verschlüsselten Produktbeschreibung 36 oder dergleichen. Bei einer Dienstleistung, die sich auf eine Produktion von z.B. Fahrzeugteilen bezieht, umfasst die Produktbeschreibung 36 also zumindest Daten zu deren Dimension und Geometrie, Material, Oberfläche usw. Für den Datenaustausch zwischen Rechteinhaber 10 und Dienstleister 20 kommt grundsätzlich jede zwischen den Parteien nutzbare kommunikative Verbindung in Betracht, also auch das Internet 38. Zur Sicherung des davon umfassten geistigen Eigentums 12-18 ist die Produktbeschreibung 36 mit an sich bekannten Verfahren verschlüsselt.

Für die Ver- und Entschlüsselung der übertragenden Daten kommt ein Ansatz zu Anwendung, wie er auch beim Digital-Rights-Management, so wie dieses bisher bekannt ist, verwendet wird: Zunächst wird auf Seiten des Dienstleisters 20 ein Schlüsselpaar generiert, vorzugsweise ein Schlüsselpaar eines asymmetrischen Schlüssels. Einen Teil des Schlüsselpaars erhält der Rechteinhaber 10, der mit seinem Teil des Schlüsselpaars, insbesondere dem öffentlichen Schlüssel, ein dem Dienstleister 20 zu übermittelndes Rechteobjekt 40 verschlüsselt. Das Rechteobjekt 40 seinerseits enthält einen Schlüssel, der zum Entschlüsseln der übertragenden Daten, also der Produktbeschreibung 36 usw. zu verwenden ist.

Mit dem vom Rechteobjekt 40 umfassten Schlüssel rechtfertigt sich die Aussage, dass die Produktbeschreibung 36 "mit dem Rechteobjekt 40 verschlüsselt" ist. Das Rechteobjekt 40 umfasst neben dem Schlüssel zum Zugriff auf die Produktbeschreibung 36 ggf. noch Spezifikationen zum Umfang der zugelassenen Verwendung der von der Produktbeschreibung 36 umfassten Daten.

Durch zwei oder mehrere nacheinander an den Dienstleister 20 gesendete Rechteobjekte 40 kann der Rechteinhaber 10 die dem Dienstleister 20 erlaubte Art der Verwendung der Produktbeschreibung 36 jeweils sukzessiv genauer spezifizieren. Bei einer Mehrzahl versandter oder zu versendender Rechteobjekte werden diese zur Unterscheidung als erstes Rechteobjekt 40, zweites Rechteobjekt 42 usw. bezeichnet.

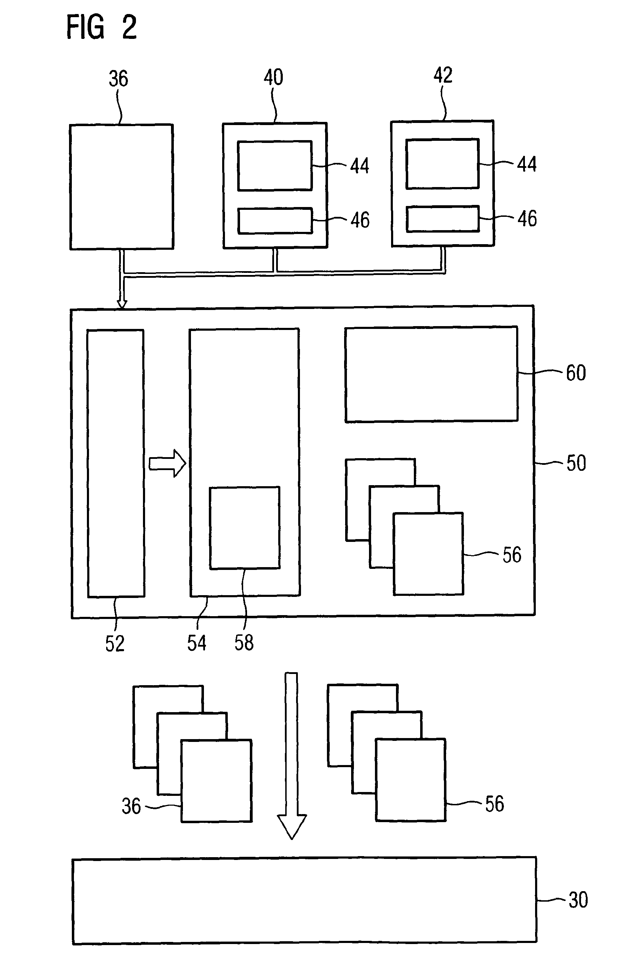

Für die weitere Erläuterung des Zusammenwirkens von Produktbeschreibung 36, erstem und zweitem Rechteobjekt 42, 44, wird auf die nachfolgende, sich auf FIG 2 beziehende Beschreibung verwiesen.

FIG 2 zeigt einzelne Details der Darstellung aus FIG 1 und geht davon aus, dass die vom Rechteinhaber 10 (FIG 1) übersandte Produktbeschreibung 36 und ein ebenfalls von diesem übermitteltes erstes und zweites Rechteobjekt 42, 44 im Einflussbereich des Dienstleisters 20 vorliegen, also auf Seiten des Dienstleisters auf elektronischem Wege, z.B. über das Internet 38, empfangen wurden.

Die Rechteobjekte 40, 42 umfassen Daten 44, die eine berechtigte Verwendung des von der Produktbeschreibung 36 umfassten geistigen Eigentums 12-18 beschreiben. Daneben umfasst zumindest das erste Rechteobjekt 40 - in der dargestellten Situation beide Rechteobjekte 40, 42 - einen Schlüssel 46. Der vom ersten Rechteobjekt 40 umfasste Schlüssel 46 erlaubt den Zugriff auf die von der Produktbeschreibung 36 umfassten Daten. Dieser in dem ersten Rechteobjekt 40 enthaltene Schlüssel 46 wird im Folgenden zur Unterscheidung als Schlüssel "k0" bezeichnet. Der Dienstleister 20 speichert den Schlüssel k0 und hält ihn für weitere Verwendung zur Verfügung.

Vorstellbar ist aber auch, dass der Schlüssel k0 für die Produktbeschreibung 36 erst in einem "letzten" Rechteobjekt 40 enthalten ist, und dass alle vorhergehenden Rechteobjekte 40 immer nur Schlüssel enthalten, die Zugriff auf das in der Hierarchie vorangehende Rechteobjekt 40 erlauben. Damit kann der Erhalt des Schlüssels 46 für die Produktbeschreibung 36 auch als Abbruchkriterium dienen, also indizieren, wann bei mehreren erhaltenen Rechteobjekten und den dazwischen bestehenden Abhängigkeiten eine vollständige oder zumindest hinreichende Beschreibung der dem Dienstleister eingeräumten Rechte vorliegt.

Wenn das erste empfangene Rechteobjekt 40 und die damit assoziierten Daten 44 als einem Rahmenvertrag entsprechend angesehen werden, erfolgt zeitlich später eine Konkretisierung des Rahmenvertrages, und zwar durch Übermittlung weiterer Rechteobjekte, die zumindest implizit, nachdem sie Daten aus einem vorangehenden Rechteobjekt konkretisieren, von dem ersten Rechteobjekt 40 hierarchisch abhängig sind. Das zweite Rechteobjekt 42 umfasst also z.B. eine Angabe einer konkret zu fertigenden Anzahl von Teilen entsprechend den Daten der Produktbeschreibung 36, während das erste Rechteobjekt (also der "Rahmenvertrag") sich auf die Art der Fertigung, also z.B. einzuhaltende Qualitätsstandards, etc. bezieht.

Eine Abhängigkeit mehrerer Rechteobjekte untereinander kann durch die davon umfassten Daten 44, eine Kennzeichnung (nicht dargestellt) und/oder davon umfasste Schlüssel 46 als spezielle Form einer Kennzeichnung ausgedrückt sein. Diese Ausdrucksmöglichkeiten für zwischen Rechteobjekten bestehende Abhängigkeiten kommen nach dem Ansatz gemäß der Erfindung alternativ oder kumulativ in Betracht.

Z.B. enthält ein übermitteltes zweites Rechteobjekt 42 wie das erste Rechteobjekt 40 einen Schlüssel 46, der einen Zugriff auf evtl. neu übermittelte Daten möglich macht. Es kann vorgesehen sein, dass ein Zugriff auf dieses spätere Rechteobjekt 42 selbst nur dann möglich ist, wenn dieses mit dem im ersten Rechteobjekt 40 oder unmittelbar vorangehenden Rechteobjekt empfangenen Schlüssel entschlüsselt wird. Bei späteren Konkretisierungen des Rahmenvertrages, also weiteren Übermittlungen abhängiger Rechteobjekte, sind weitere Schlüssel "k1", "k2" usw. enthalten, die einen Zugriff auf später empfangene Rechteobjekte möglich machen, so dass sich durch die Reihenfolge des Eintreffens der Rechteobjekte, bevorzugt aber anhand der zu verwendenden Schlüssel implizit eine Hierarchie der Rechteobjekte ergibt. Bei tieferen Hierarchien kann auch vorgesehen sein, dass nur die Anwendung sämtlicher zuvor erhaltener Schlüssel, insbesondere in der richtigen Reihenfolge, den Zugriff auf das jeweilige Rechteobjekt erlaubt. Evtl. kann auch eine Entschlüsselung zusätzlich mit dem Schlüsselteil vorgesehen sein, der auf Seiten des Dienstleisters 10 ursprünglich generiert wurde und mit dem auch das erste Rechteobjekt 40, das ja nicht mit einem vorher in einem Rechteobjekt empfangenen Schlüssel geschützt werden kann, verschlüsselt ist. Bei dieser Kennzeichnung der Abhängigkeiten ist auf jeden Fall sichergestellt, dass auf ein späteres Rechteobjekt nur dann zugegriffen werden kann, wenn das in der Hierarchie unmittelbar vorangehende Rechteobjekt empfangen und verarbeitet (also hat entschlüsselt werden können) wurde.

Als Mittel zum Ausführen des eingangs und im Weiteren beschriebenen Verfahrens und zur Verarbeitung der empfangenen Produktbeschreibung 36 und der Rechteobjekte 40, 42 ist ein Rechtemanager 50 gezeigt, der zumindest eine Funktionalität 52 zum Empfangen (z.B. über das Internet 38; FIG 1) von Produktbeschreibung 36 und Rechteobjekten 40, 42 umfasst. Darüber hinaus umfasst der Rechtemanager 50 eine Funktionalität 54 zum Generieren abgeleiteter Rechteobjekte 56 durch Kombination zweier oder mehrerer Rechteobjekte 40, 42 oder abgeleiteter Rechteobjekte 56. Die Kombination zweier abgeleiteter oder empfangener Rechteobjekte 40, 42, 56 ist eine Kombination der von den jeweiligen Rechteobjekten 40, 42, 56 umfassten Daten 44. Für eine solche Kombination umfasst die Funktionalität 54 zum Generieren abgeleiteter Rechteobjekte 56 Mittel, die die Funktionalität eines Parsers 58 implementieren. Der Parser 58 ist zur Auswertung und Verarbeitung empfangener oder abgeleiteter Rechteobjekte 40, 42, 56 bestimmt und ermöglicht die Verarbeitung und Auswertung einer für die Daten 44 vorgesehenen Syntax. Ergebnis einer solchen Kombination ist zumindest ein abgeleitetes Rechteobjekt 56, das ggf. einen Zugriff auf von der Produktbeschreibung 36 umfasstes geistiges Eigentum 12-18 erlaubt. Dies wird an die Produktionsanlage 30 weitergeleitet, wo das geistige Eigentum 12-18 des Rechteinhabers 10 (FIG 1) entsprechend dessen Vorgaben, also entsprechend der von den Rechteobjekten 40, 42 umfassten Daten 44, genutzt wird.

Die Kombination von Daten 44 und empfangener Rechteobjekte 40, 42 erfolgt z.B. auf Basis einer von den Rechteobjekten 40, 42 umfassten Kennzeichnung, z.B. in Form des Schlüssels 46. Ein gleicher Schlüssel 46 bei einer Mehrzahl von Rechteobjekten 40, 42 kann genauso auf eine Kombinierbarkeit hinweisen wie abhängige Schlüssel k0, k1, k2. Zusätzlich oder alternativ zur Kennzeichnung der Kombinierbarkeit durch den jeweiligen Schlüssel 46 kommt eine separate Kennzeichnung in Betracht, z.B. eine Zeichenkette, die einen Bestandteil umfasst, der eine Gruppierung kodiert. Ein Beispiel für eine solche Zeichenkette sind einzelne Buchstaben oder Buchstabengruppen, also z.B. "A" oder "XZ". Eine hierarchische Abhängigkeit kann neben den Zeichen, die die Gruppenzugehörigkeit kodieren, durch Zeichen kodiert sein, die eine Reihenfolge kodieren, also "A1", "A2" usw. oder "XZa", "XZb" usw.

Eine derartige Kennzeichnung hat den Vorteil, dass bereits mit dieser und nicht erst anhand einer Analyse der von den empfangenen Rechteobjekten 40, 42 umfassten Daten 44 eine mögliche oder tatsächliche wechselseitige Relevanz erkennbar ist. Zur Kombination empfangener und abgeleiteter Rechteobjekte 40, 42, 56 verwendet der Rechtemanager 50, konkret die davon umfasste Funktionalität 54, einen Speicher 60, in dem durch den Parser 58 interpretierte Daten 44 bisheriger Rechteobjekte 40, 42, 56 vorgehalten oder temporär abgelegt werden.

Eine Möglichkeit, wie erkannt werden kann, wann mit den Rechteobjekten 40, 42 ausreichend Daten 44 übermittelt wurden, so dass eine konkrete Dienstleistung ausreichend genau spezifiziert ist und ein letztendlich resultierendes abgeleitetes Rechteobjekt 56 zusammen mit der Produktbeschreibung 36, auf die sich dieses bezieht, an die Produktionsanlage 30 weitergeleitet werden kann, besteht in der Verwendung von Zählern.

Wenn zumindest das erste Rechteobjekt 40 als Bestandteil seiner Daten 44 zumindest eine Spezifikation umfasst, mit der eine Variable instanziiert wird, der durch spätere Rechteobjekte ein Wert zugewiesen wird, kann mit jeder derartigen Spezifikation ein Zähler inkrementiert werden, der bei jeder (erstmaligen) Wertzuweisung an eine Variable wieder dekrementiert wird. Im Ergebnis kann bei einem Zählerstand "Null" davon ausgegangen werden, dass alle Variablen spezifiziert sein müssen und damit ein vollständig abgeleitetes Rechteobjekt 56, das an Produktionsmittel usw. weitergeleitet werden kann, vorliegen muss. Es gibt aber noch die Möglichkeit, z.B. Default-Werte vorzusehen, d.h. wenn bestimmte Variablen innerhalb einer vorgegebenen Zeit nicht spezifiziert werden, kommen diese Default-Werte zum Tragen. Bei solchen Default-Werten wird in dem Moment, in dem der Default-Wert zum Einsatz kommt, der o.g. Zähler dekrementiert, so dass auch bei diesem Sonderfall ein definierter Zählerstand, insbesondere "Null" als Auslöser für die Weiterleitung eines resultierenden abgeleiteten Rechteobjekts 56 in Betracht kommt. Alternativ kommt auch der Erhalt des Schlüssels 46 für die Produktbeschreibung 36 als Abbruchkriterium in Betracht, wenn dieser - wie oben beschrieben - erst im "letzten" Rechteobjekt enthalten ist.

Damit lässt sich die Erfindung kurz wie folgt darstellen: Die Erfindung betrifft ein Verfahren zum Betreiben einer technischen Anlage 30 unter Verwendung von in Form von Daten von einem Rechteinhaber 10 bereitgestelltem, gegen unberechtigte Verwendung gesichertem geistigen Eigentum 12-18 und eine nach dem Verfahren arbeitende Vorrichtung, wobei zum Sichern des geistigen Eigentums 12-18 verschlüsselte Rechteobjekte 40, 42 verwendet werden und sukzessiv zumindest zwei Rechteobjekte - erstes und zweites Rechteobjekt 40, 42 - empfangen werden, wobei abgeleitete Rechteobjekte 56 durch Kombination zweier oder mehrerer Rechteobjekte 40, 42 oder abgeleiteter Rechteobjekte 56 aufgrund davon jeweils umfasster Daten 44 generiert und schließlich zum Betreiben der Anlage 30 verwendet werden, wobei insbesondere für die Generierung abgeleiteter Rechteobjekte 56 zwischen empfangenen und abgeleiteten Rechteobjekten 40, 42, 56 bestehende hierarchische Abhängigkeiten ausgewertet werden, die z.B. durch von den Rechteobjekten 40, 42, umfasste Schlüssel ausgedrückt sind.

## Patentansprüche

1. Verfahren zum Betreiben einer technischen Anlage (30) unter Verwendung von geistigem Eigentum (12,14,16,18), das von einem Rechteinhaber (10) bereitgestellt wird und gegen unberechtigte Verwendung gesichert wird oder ist,
wobei zum Sichern des geistigen Eigentums (12-18) verschlüsselte Rechteobjekte verwendet werden,
wobei sukzessiv zumindest zwei Rechteobjekte - erstes und zweites Rechteobjekt (40,42) - empfangen werden,
wobei abgeleitete Rechteobjekte (56) durch Kombination zweier oder mehrerer Rechteobjekte (40,42) oder abgeleiteter Rechteobjekte (56) aufgrund davon jeweils umfasster Daten (44) generiert und schließlich zum Betreiben der technischen Anlage (30) verwendet werden.

2. Verfahren nach Anspruch 1, wobei einzelne von dem ersten oder zweiten Rechteobjekt (40,42) umfasste Daten (44) sich auf einzelne von dem zweiten bzw. ersten Rechteobjekt (42, 40) umfasste Daten (44) beziehen.

3. Verfahren nach Anspruch 2, wobei zusammengehörige erste und zweite Rechteobjekte (40,42), also in der Form abhängig zusammengehörige Rechteobjekte (40,42), dass sich von einem zweiten Rechteobjekt (42) umfasste Daten (44) auf von einem ersten Rechteobjekt (40) umfasste Daten (44) beziehen, eine diese Zusammengehörigkeit deutlich machende Kennzeichnung umfassen.

4. Verfahren nach Anspruch 3, wobei die Kennzeichnung sich mit einem von den Rechteobjekten (40,42) umfassten Schlüssel (46) ergibt.

5. Verfahren nach Anspruch 4, wobei jedes Rechteobjekt (40, 42) einen Schlüssel (46) zum Entschlüsseln evtl. von diesem Rechteobjekt (40,42) abhängiger Rechteobjekte (56) umfasst.

6. Verfahren nach Anspruch 5, wobei jedes abhängige Rechteobjekt (40,42) unter Verwendung jedes entlang einer jeweiligen Hierarchie empfangenen Schlüssels (46) entschlüsselt wird.

7. Vorrichtung zum Betreiben einer technischen Anlage (30) unter Verwendung von geistigem Eigentum (12,14,16,18), das von einem Rechteinhaber (10) bereitgestellt und gegen unberechtigte Verwendung gesichert ist,
mit Mitteln zum Ausführen des Verfahrens nach einem der vorangehenden Ansprüche, umfassend zumindest:
eine Funktionalität (52) zum sukzessiven Empfang zumindest zweier Rechteobjekte (42,44),
eine Funktionalität (54) zum Generieren abgeleiteter Rechteobjekte (56) durch Kombination zweier oder mehrerer Rechteobjekte (42,44) oder abgeleiteter Rechteobjekte (56) aufgrund davon jeweils umfasster Daten (48) und
eine Funktionalität zum Weiterleiten abgeleiteter Rechteobjekte (56) zum Betreiben der technischen Anlage (30).

8. Vorrichtung nach Anspruch 7, mit Mitteln, die die Funktionalität eines Parsers (58) implementieren, die zur Auswertung und Verarbeitung empfangener Rechteobjekte (42,44) und abgeleiteter Rechteobjekte (56) bestimmt sind und von der Funktionalität (54) zum Generieren abgeleiteter Rechteobjekte (56) umfasst sind.

9. Computerprogramm zur Ausführung eines Verfahrens gemäß einem der Ansprüche 1 bis 6.

10. Datenträger mit einem Computerprogramm nach Anspruch 9.

11. Computersystem, insbesondere Vorrichtung nach Anspruch 7 oder 8, auf dem ein Computerprogramm nach Anspruch 9 geladen ist.
